# EUROPEAN PATENT APPLICATION

(11) **EP 4 692 138 A1**
(43) Date of publication of application: **11.02.2026**
(21) Application number: 23934844.4
(22) Date of filing: 29.08.2023
(51) Int. Cl.: C08F 136/06, C08F 2/26, C08F 2/38, C08F 279/04, C08F 212/10, C08F 220/44, C08L 25/12, C08L 55/02

(54) **POLYBUTADIENE LATEX AND PREPARATION METHOD THEREFOR, AND ABS RESIN AND PREPARATION METHOD THEREFOR**

(30) Priority: 28.04.2023 CN 202310478613
(71) Applicant: KINGFA SCI. & TECH. CO., LTD., Guangzhou, Guangdong 510663 (CN); Liaoning Kingfa SCI. & Tech. Co., Ltd., Dawa District Panjin, Liaoning 124211 (CN)
(72) Inventor: WANG, Qi, Guangzhou, Guangdong 510663 (CN); CHEN, Pingxu, Guangzhou, Guangdong 510663 (CN); YE, Nanbiao, Guangzhou, Guangdong 510663 (CN); TIAN, Feng, Guangzhou, Guangdong 510663 (CN); CHENG, Qing, Guangzhou, Guangdong 510663 (CN); LI, Wenlong, Guangzhou, Guangdong 510663 (CN); HU, Zhihua, Guangzhou, Guangdong 510663 (CN); LIU, Tuanjie, Guangzhou, Guangdong 510663 (CN); SUN, Shichang, Guangzhou, Guangdong 510663 (CN); ZHAO, Xiangfeng, Guangzhou, Guangdong 510663 (CN); SUN, Yuping, Guangzhou, Guangdong 510663 (CN); WANG, Rui, Guangzhou, Guangdong 510663 (CN); WANG, Hao, Guangzhou, Guangdong 510663 (CN)
(74) Representative: Petraz, Gilberto Luigi
(86) International application number: PCT/CN2023/115483
(87) International publication number: WO 2024/221675

(57) **Abstract**

The present invention relates to a polybutadiene latex and an ABS resin, and preparation methods therefor. An average particle size of the polybutadiene latex is 290 - 315 nm, a half-peak width of a number-average particle size distribution curve is 20 - 150 nm, and meanwhile, a content of a residual butadiene monomer in the latex accounts for 0.005%-1.6% of a dry basis of the entire polybutadiene latex. The ABS resin includes: 15-40 parts of ABS high-rubber powder and 60-78 parts of a styrene-acrylonitrile copolymer. The ABS resin has a good electroplated surface appearance and plating adhesion.

## Description

### Technical Field

The present invention belongs to the technical field of high polymers, and particularly relates to a polybutadiene latex and an ABS resin, and preparation methods therefor.

### Related Art

Compared with metal components and parts, plastic electroplated components and parts not only can achieve good metallic textures, but also can significantly decrease the weights of the components and parts, thereby improving their performance in aspects, such as electricity, heat, and corrosion resistance while effectively improving the appearance and decoration performance of plastic materials, and meanwhile improving mechanical strength of surfaces. However, during selection of the plastic materials for electroplating, factors, such as processability of the materials, mechanical properties, material cost, electroplating cost, difficulty of electroplating, and dimensional accuracy, need to be comprehensively considered. Among various high polymer materials, ABS resin materials, due to their structural advantages, not only have excellent comprehensive performance and are easy to process and mold, but also obtain higher plating adhesion due to easy erosion by an electroplating solution on ABS surfaces, thus having been widely used in electroplating currently. An ABS resin specifically refers to a blend of a graft copolymer of polybutadiene rubber, a styrene monomer, and acrylonitrile, and an SAN matrix resin, where A represents acrylonitrile, B represents butadiene, and S represents styrene. For electroplating-grade ABS plastics, the contents of various components in materials are critical, where the content of butadiene has a significant impact on electroplating. This is because ABS is a non-conductor, a conductive layer needs to be covered on a material surface for electroplating, and the formation of the conductive layer requires processes, such as roughening, neutralization, sensitization, activation, and chemical plating, where the roughening includes etching the butadiene through an oxidation reaction and forming an activated hydrophilic surface and an anchorlike structure on a part to improve the plating adhesion. Therefore, when the content of butadiene is higher, the plating adhesion is better. In practical applications, material designers, in order to blindly improve the plating adhesion, greatly increase the content of butadiene rubber and meanwhile increase the particle size of the butadiene rubber, such that the butadiene rubber is highly prone to agglomeration in the ABS resin, and numerous defects, such as pits, occur on the surfaces of injection-molded components and parts, thereby greatly decreasing the yield of products of the electroplated components and parts. Especially for components and parts of interior and exterior trims with extremely severe use requirements, such as electroplated door handles of automobiles, grilles, and trim strips, the defects, such as pits, decrease the yield of the electroplated products to be lower than 50%, thus bringing great troubles to main engine plants of automobiles and component and part suppliers.

Chinese patent CN114479300A discloses an electroplating-grade ABS resin composition, where in parts by weight, the electroplating-grade ABS resin composition includes 15-30 parts of a polybutadiene rubber-grafted acrylonitrile and styrene copolymer, 60-80 parts of an SAN matrix resin, and 5-10 parts of an SAN solubilizing resin. The content of acrylonitrile in the SAN matrix resin is 30-34 wt%, and the content of acrylonitrile in the SAN solubilizing resin is 24-27 wt%. By adding the SAN solubilizing resin, the compatibility of polybutadiene rubber in the SAN matrix resin is improved, so that ABS forms an inverted boot structure with a sharp edge at an electroplating roughening stage to provide greater plating traction, thereby greatly reducing the formation of pits defects, and increasing the qualification rate of electroplated products. Chinese patent CN104045963B discloses a glass fiber reinforced high-gloss ABS resin composition suitable for electroplating. In the patent, a lowmolecule-weight SAN additive is used, which can not only enhance the rigidity of the ABS resin composition, but also effectively improve the flowability of the ABS resin composition, thereby reducing glass fiber exposure, providing a surface of an injection-molded part with high gloss, effectively decreasing coefficients of linear thermal expansion of plastic electroplated products, and effectively reducing plating skips and pits caused by the glass fiber exposure. Chinese patent CN112489635A discloses a transparent PC/ABS alloy and a preparation method therefor. In the invention, an ABS resin and styrene-grafted butadiene rubber are first blended and extruded, and then a rubber phase in the ABS is encapsulated in a styrene phase using a compatibilizer to prevent agglomeration of the rubber. By adopting a two-step method, a transparent ABS masterbatch with a refractive index close to that of PC is first prepared, and then the masterbatch and a PC resin are co-extruded and granulated to prepare and obtain the transparent PC/ABS alloy. The above technical solutions can decrease the possibility of generating pits to a certain extent, but all cannot fundamentally solve the thermodynamic tendency of self-agglomeration of rubber by introducing a third component or a compatibilizer to enhance the dispersion of rubber from the perspective of postmodification.

### CONTENT OF INVENTION

The technical problem to be solved by the present invention is to provide a polybutadiene latex and an ABS resin, and preparation methods therefor, to overcome the defect of numerous pits easily occurring during electroplating of ABS resins in the prior art.

The present invention provides a polybutadiene latex, where an average particle size of the polybutadiene latex is 290-315 nm, a half-peak width of a number-average particle size distribution curve is 20-150 nm, and a content of a residual butadiene monomer in the polybutadiene latex accounts for 0.005%-1.6% of a dry basis of the entire polybutadiene latex.

The above content proportion of the residual butadiene monomer is quantitatively determined by gas chromatography using an external standard method, specifically including: weighing 0.1-0.5 g of a sample, reaching a constant value of 0.1 mg, adding the sample into a headspace vial, placing the headspace vial containing the sample into a headspace autosampler, performing gas chromatography using a non-polar chromatographic column (PC-1) for gas chromatography, measuring an integral area of a gas chromatogram of the residual butadiene in the latex by a flame ionization detector (FID), obtaining an amount of the residual butadiene by calculation using a standard curve, and dividing the value by the total dry basis of the entire polybutadiene latex.

In the present invention, the average particle size of the polybutadiene latex is 290-315 nm, which may be understood as including but not limited to 290 nm, 295 nm, 298 nm, 300 nm, 302 nm, 303 nm, 305 nm, 308 nm, 310 nm, 312 nm, and 315 nm.

In the present invention, the half-peak width of the number-average particle size distribution curve is 20-150 nm, which may be understood as including but not limited to 20 nm, 22 nm, 25 nm, 28 nm, 30 nm, 33 nm, 35 nm, 40 nm, 42 nm, 45 nm, 50 nm, 53 nm, 55 nm, 58 nm, 60 nm, 63 nm, 65 nm, 70 nm, 72 nm, 75 nm, 78 nm, 80 nm, 83 nm, 85 nm, 88 nm, 90 nm, 92 nm, 95 nm, 98 nm, 100 nm, 103 nm, 105 nm, 107 nm, 110 nm, 113 nm, 115 nm, 117 nm, 120 nm, 123 nm, 125 nm, 128 nm, 130 nm, 133 nm, 135 nm, 138 nm, 140 nm, 142 nm, 145 nm, 148 nm, and 150 nm.

In the present invention, the content of the residual butadiene monomer in the polybutadiene latex accounts for 0.005%-1.6% of the dry basis of the entire polybutadiene latex, which may be understood as including but not limited to 0.005%, 0.008%, 0.01%, 0.012%, 0.015%, 0.018%, 0.021%, 0.025%, 0.028%, 0.030%, 0.032%, 0.035%, 0.038%, 0.040%, 0.045%, 0.050%, 0.055%, 0.060%, 0.065%, 0.070%, 0.075%, 0.08%, 0.085%, 0.090%, 0.095%, 0.1%, 0.15%, 0.2%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.0%, 1.2%, 1.3%, 1.5%, and 1.6%.

Preferably, the average particle size of the polybutadiene latex is 300-310 nm, and the half-peak width of the number-average particle size distribution curve is 30-100 nm.

Preferably, the content of the residual butadiene monomer in the polybutadiene latex accounts for 0.01%-0.8% of the dry basis of the entire polybutadiene latex.

Preferably, a gel weight fraction of the polybutadiene latex is 50-95%. The content of gel is controlled within a reasonable range, so that the gel always maintains excellent dispersion performance during subsequent polymerization and blending processes to better avoid poor electroplating caused by agglomeration of rubber. A test standard for the content of gel is "Determination of Gel Content of Synthetic Raw Rubber", with a standard number of SH/T 1050-1991.

The present invention further provides a method for preparing the polybutadiene latex, which includes:

mixing raw materials for a polymerization reaction to obtain the polybutadiene latex, where the raw materials include, in parts by weight: 95-115 parts of butadiene, 0.02-6 parts of an initiator, 0.02-10 parts of an electrolyte, 0.1-12 parts of an emulsifier, 0.01-6 parts of a chain transfer agent, 0.02-8 parts of a rubber particle size control agent, 0-6 parts of a gel content regulator, and 40-400 parts of water; and the rubber particle size control agent is polyoxyethylene carboxylate.

Preferably, the initiator includes one or more of sodium persulfate, potassium persulfate, ammonium persulfate, and azobisisobutyronitrile.

Preferably, the electrolyte includes one or more of sodium carbonate, sodium bicarbonate, sodium hydroxide, potassium carbonate, and potassium hydroxide.

Preferably, the emulsifier includes one or more of a sodium salt of a naphthalenesulfonic acid formaldehyde condensate, a potassium salt of a naphthalenesulfonic acid formaldehyde condensate, potassium oleate, potassium stearate, disproportionated potassium rosinate, sodium dodecylbenzenesulfonate, and sodium dodecylsulfonate.

Preferably, the chain transfer agent includes one or more of tertiary dodecyl mercaptan, n-dodecyl mercaptan, tetradecyl mercaptan, tridecyl mercaptan, undecyl mercaptan, and decyl mercaptan.

Preferably, the raw materials include, in parts by weight: 98-110 parts of the butadiene, 0.12-5 parts of the initiator, 0.05-6 parts of the electrolyte, 1-8 parts of the emulsifier, 0.1-4 parts of the chain transfer agent, 0.05-5 parts of the rubber particle size control agent, 0.2-5 parts of the gel content regulator, and 50-300 parts of the water.

Preferably, the rubber particle size control agent has a structural formula of RCOO(CH₂CH₂O)ₘH, where R is long-chain alkyl, the long-chain alkyl has a carbon atom number of 4-19, and m is 4-11; and further preferably, the long-chain alkyl has the carbon atom number of 5-12, and m is 4-8.

Preferably, the gel content regulator is dialkyldithioxanthate, where the alkyl has a carbon atom number of 1-13; and further preferably, the alkyl has the carbon atom number of 1-10.

Preferably, the polymerization reaction includes: heating to 55-85°C for reacting for 23-38 hours.

The present invention further provides ABS high-rubber powder, where the ABS high-rubber powder is a copolymer of the above-mentioned polybutadiene latex, styrene, and acrylonitrile.

Preferably, the polybutadiene latex has a weight fraction of 50-70%, and the acrylonitrile has a weight fraction of 4-20%; and further preferably, the polybutadiene latex has the weight fraction of 52-66%, and the acrylonitrile has the weight fraction of 6-15%.

The present invention further provides an ABS resin, where the ABS resin includes, in parts by weight, the following components: 15-40 parts of the above-mentioned ABS high-rubber powder and 60-78 parts of a styrene-acrylonitrile copolymer.

The present invention further provides a method for preparing the ABS resin, which includes:
mixing the components, and extruding the same through a twin-screw extruder, followed by cooling and pelletizing to obtain the ABS resin.

The present invention further provides use of the ABS resin in electroplated parts of interior and exterior trims of automobiles, for example, use in front and rear door handles, front grilles, interior trim strips, and outer frames of navigation panels, etc.

In the present invention, the average particle size of the polybutadiene latex is controlled at 290-315 nm, and the half-peak width of the number-average particle size distribution curve is 20-150 nm. Due to an extremely narrow particle size distribution, the butadiene rubber in the latex approximately exhibits the characteristic of monodispersion. This characteristic is greatly different from the particle size distribution of butadiene rubber obtained by polymerization using traditional methods. The number of rubber particles closer to the average particle size is larger, and the number of rubber particles farther away from the average particle size tends to zero. The polybutadiene latex with this characteristic has extremely excellent stability during subsequent grafting and coagulation processes. Especially in terms of grafting ratio, a uniform grafting ratio ensures that each butadiene rubber can be well grafted and encapsulated, thereby avoiding agglomeration of the rubber, and decreasing the possibility of generating pits during electroplating of the ABS resin. Furthermore, the uniform dispersion of rubber is conducive to improving plating adhesion to avoid the generation of defects such as plating skips. On the other hand, the content of the residual butadiene monomer in the polybutadiene latex accounts for 0.005%-1.6% of the dry basis of the entire polybutadiene latex, because the residual butadiene monomer easily reacts with the grafting monomers styrene and acrylonitrile. Therefore, the appropriate content of the residual butadiene monomer may affect the proportion of a butadiene unit in a graft chain segment of the grafted rubber, thereby improving the compatibility between the grafted rubber and the blended SAN resin, improving the dispersion of the rubber, and further decreasing the possibility of generating appearance pits on electroplated parts.

### SUMMARY OF INVENTION

### Effects of Invention

The polybutadiene latex used in the present invention enables the ABS resin to have a good electroplated surface appearance and plating adhesion.

The ABS resin of the present invention has a surface pits grade of 3A-5A and a plating adhesion of 0.62-1.28 kgf/cm.

### DESCRIPTION OF EMBODIMENTS

The present invention is further illustrated below in combination with specific examples. It should be understood that these examples are provided solely for describing the present invention and are not intended to limit the scope of the present invention. Furthermore, it should be understood that, after reading the contents of the present invention, those skilled in the art may make various changes or modifications to the present invention, and such equivalent forms also fall within the scope defined by the claims appended to the present application.

Sources of reagents are as follows:
butadiene: industrial-grade butadiene, with a purity of greater than 96%, Hoarui Chemical;
initiator: potassium persulfate, commercially available;
electrolyte: sodium bicarbonate, commercially available;
emulsifier: sodium dodecylbenzenesulfonate, commercially available;
chain transfer agent: n-dodecyl mercaptan, commercially available;
rubber particle size control agent 1: polyoxyethylene hexanoate, C5H11COO(CH2CH2O)6H; CIHEEM, the United States, LMEO-6;
rubber particle size control agent 2: polyoxyethylene laurate, C11H23COO(CH2CH2O)6H; CIHEEM, the United States, LMEO-12;
rubber particle size control agent 3: polyoxyethylene stearate, C17H35COO(CH2CH2O)9H; CIHEEM, the United States, LMEO-18;
gel content regulator 1: dithiodi-n-butyl xanthate, CP8, Zhengzhou ACME Chemical Co., Ltd.;
gel content regulator 2: dithiodiisopropylxanthate, DIP, Shanghai Yuanye BioTechnology Co., Ltd.;
gel content regulator 3: didodecyldithioxanthate, DP, Hubei Xinkang Pharmaceutical & Chemical Co., Ltd. Chemical Research Institute;
styrene: purchased from Aladdin Reagent, with a purity of greater than or equal to 99%;
acrylonitrile: purchased from Aladdin Reagent, with a purity of greater than or equal to 99%;
styrene-acrylonitrile copolymer: PN-118, Chi Mei, Taiwan, China.

Unless otherwise specified, a certain component (such as an initiator or an electrolyte) in parallel examples and comparative examples of the present invention is the same commercially available product.

A method for preparing a polybutadiene latex includes:
mixing various components according to proportions in Table 1 and Table 2, heating up to 55°C to initiate a polymerization reaction, continuously heating up to 85°C within 30 hours, and terminating the reaction after 32 hours to obtain the polybutadiene latex.

Performance tests of the polybutadiene latex:
(1) Average particle size and particle size distribution test: The average particle size and particle size distribution of the polybutadiene latex were analyzed using a Malvern laser diffraction particle size analyzer with the model of Mastersizer 3000E, a number-average particle size distribution curve was plotted, and a half-peak width was measured.
(2) Gel content (weight fraction) test: The test was carried out according to the testing standard "Determination of Gel Content of Synthetic Raw Rubber", with a standard number of SH/T 1050-1991.
(3) Residual butadiene content: After being dried, the latex was dissolved with N,N-dimethylformamide in a headspace vial, heated to achieve gas-liquid equilibrium of a component to be tested, and then quantitatively sucked into the headspace for determination by gas chromatography. Qualitative analysis was performed according to the retention time, and quantification was performed by an internal standard method with n-pentane as an internal standard substance. A peak appearing at 2.25-2.50 min refers to the residual butadiene substance. A gas chromatograph with the model of Shimadzu GC-MS-QP2010 was used with a chromatographic column of RTX-WAX quartz capillary column, with the size of 30 m × 0.25 mm × 0.5 µm, at a column temperature of 80°C maintained for 12 min, heated to 120°C at 10°C/min and maintained for 10 min, an injection port temperature of 220°C, and a detector temperature of 250°C.

ABS high-rubber powder is a copolymer of a polybutadiene latex, styrene, and acrylonitrile, and its preparation method includes: according to proportions of the polybutadiene latex, the styrene, and the acrylonitrile in Table 3, adding the polybutadiene latex into a reaction kettle, adding 0.015 part of ferrous sulfate into the reaction kettle, stirring evenly, heating the reaction kettle to 67°C, continuously adding 2.51 parts of cumene hydroperoxide, the acrylonitrile, the styrene, 1.5 parts of tertiary dodecyl mercaptan, 5 parts of sodium dodecylsulfonate, and 175 parts of deionized water dropwise for 2 hours, and after completion of the heating, carrying out a reaction continuously for 5 hours to obtain a grafted latex; and weighing and adding 1,000 parts of the grafted latex into a coagulation reaction kettle, starting stirring, heating up to 75°C, gradually adding 450 parts of 5% sulfuric acid within 2 hours, then heating up to 91°C, maintaining such a temperature for 3 hours, filtering a resulting coagulated latex using a 325-mesh filter screen, and drying the coagulated latex with a fluidized bed dryer at 60°C for 6 hours to obtain the ABS high-rubber powder with a moisture content of < 1%, where ABS high-rubber powders prepared and obtained in Examples 11-20, Comparative Examples 4-6, and Examples 21-22 are designated as ABS high-rubber powder 1, ABS high-rubber powder 2, ABS high-rubber powder 3, ABS high-rubber powder 4, ABS high-rubber powder 5, ABS high-rubber powder 6, ABS high-rubber powder 7, ABS high-rubber powder 8, ABS high-rubber powder 9, ABS high-rubber powder 10, ABS high-rubber powder 11, ABS high-rubber powder 12, ABS high-rubber powder 13, ABS high-rubber powder 14, and ABS high-rubber powder 15, respectively.

A method for preparing an ABS resin includes: mixing components according to Tables 4-6, and extruding the same using a twin-screw extruder, followed by cooling and pelletizing to obtain the resin, where an extrusion temperature is 185-220°C, a rotation speed of a screw rod is 300 r/min, and a lengthto-diameter ratio of the screw rod is 25:1.

### Performance tests of the ABS resin:

(1) ABS surface pits test: The ABS resin was injection-molded into a standard square plate (100 mm * 100 mm * 2 mm), pits on the square plate were counted using a Leica optical microscope with the model of DM6 M LIBS, each sample was tested with 3 sample plates for average counting, and grades were classified as 5A (0 pits), 4A (1-2 pits), 3A (3-5 pits), 2A (6-10 pits), and 1A (more than 10 pits).
(2) Plating adhesion: The plating adhesion was tested according to the ASTM B533(85)-2013 standard for peel strength of alloy electroplated plastics, each sample was tested with 5 specimens, and the average adhesion was calculated.
(3) Standard deviation of a grafting ratio: After being dried, the ABS high-rubber powder was weighed at about 1.000 g, which was designated as m₀; a reagent flask was weighed, which was denoted as m₁; the high-rubber powder was placed in the reagent flask, and then about 25 ml of acetone was added; shaking was performed for 2 hours to fully dissolve the high-rubber powder; the reagent flask was placed in a high-speed centrifuge for centrifugation for 30 minutes, where a rotation speed of the centrifuge was set at 15,000 rpm; after centrifugal separation, the acetone solution was immediately removed without bringing out the powder at the bottom; the acetone was supplemented to about 25 ml, then shaking was performed to thoroughly mix the solution, and centrifugal separation was performed again; after the centrifugal separation, the acetone solution was removed; and then the flask containing insoluble matter was placed in an oven for drying at 80°C for 8 hours, placed in a vacuum oven for continuous drying at 80°C for another 4 hours, cooled to room temperature, and weighed as m₂. Grafting ratio = (m₂-m₁-m₀*n)/(m₀*n), where m₀ refers to the mass of the ABS high-rubber powder, g; m₁ refers to the mass of the reagent flask, g; m₂ refers to the total mass of the reagent flask and a separated substance after drying, g; and n refers to the content of rubber in the ABS high-rubber powder, which is a feed ratio (polybutadiene latex weight/(polybutadiene latex weight+styrene weight+acrylonitrile weight)) of a dry basis of a butadiene latex in Table 3. A method for calculating the standard deviation of the grafting ratio includes: for the same ABS high-rubber powder sample, taking 10 samples to test the grafting ratio, and firstly, respectively subtracting a mean value of 10 tests from each test value to obtain a set of 10 data; secondly, summing squares of the 10 data obtained in the above step; then, dividing a sum value by 10; and finally, performing extraction of square root to obtain a square root, namely the standard deviation of the grafting ratio. The smaller standard deviation of the grafting ratio indicates the stabler grafting ratio.

**Table 1 Proportions in Examples 1-10 (parts by weight)**

| | Examp le 1 | Examp le 2 | Examp le 3 | Examp le 4 | Examp le 5 | Examp le 6 | Examp le 7 | Examp le 8 | Examp le 9 | Examp le 10 |
|---|---|---|---|---|---|---|---|---|---|---|
| Butadie ne | 105 | 105 | 105 | 105 | 105 | 95 | 115 | 98 | 110 | 105 |
| Initiator | 3 | 3 | 3 | 3 | 3 | 0.02 | 6 | 0.12 | 5 | 3 |
| Electrol yte | 5 | 5 | 5 | 5 | 5 | 0.02 | 10 | 0.05 | 6 | 5 |
| Emulsifi er | 6 | 6 | 6 | 6 | 6 | 0.1 | 12 | 1 | 8 | 6 |
| Chain transfer agent | 3 | 3 | 3 | 3 | 3 | 0.01 | 6 | 0.1 | 4 | 3 |
| Rubber particle size control agent 1 | 4 | | | 4 | 4 | 0.02 | 8 | 0.05 | 5 | 4 |
| Rubber particle size control agent 2 | | 4 | | | | | | | | |
| Rubber particle size control agent 3 | | | 4 | | | | | | | |
| Gel content regulator 1 | 3 | 3 | 3 | | | 0.1 | 6 | 0.2 | 5 | 0 |
| Gel content regulator 2 | | | | 3 | | | | | | |
| Gel content regulator 3 | | | | | 3 | | | | | |
| Water | 100 | 100 | 100 | 100 | 100 | 40 | 400 | 50 | 300 | 100 |
| Average particle size (nm) | 305 | 300 | 290 | 310 | 308 | 315 | 290 | 310 | 300 | 303 |
| Half-peak width of a number-average particle size distribution curve (nm) | 30 | 50 | 150 | 80 | 90 | 150 | 20 | 100 | 30 | 72 |
| Gel weight fraction (%) | 80 | 82 | 85 | 70 | 45 | 95 | 50 | 90 | 68 | 96 |
| Content of a residual butadiene monomer (%) | 0.1 | 0.01 | 0.005 | 0.8 | 0.2 | 1.6 | 0.005 | 0.8 | 0.01 | 0.15 |

**Table 2 Proportions in Comparative Examples 1-3 (parts by weight)**

| | Comparative Example 1 | Comparative Example 2 | Comparative Example 3 |
|---|---|---|---|
| Butadiene | 105 | 105 | 105 |
| Initiator | 3 | 3 | 3 |
| Electrolyte | 5 | 5 | 5 |
| Emulsifier | 6 | 6 | 6 |
| Chain transfer agent | 3 | 3 | 3 |
| Rubber particle size control agent 1 | | 0.01 | 10 |
| Gel content regulator 1 | 3 | 3 | 3 |
| Water | 100 | 100 | 100 |
| Average particle size (nm) | 317 | 333 | 283 |
| Half-peak width of a number-average particle size distribution curve (nm) | 190 | 300 | 15 |
| Gel weight fraction (%) | 77 | 78 | 86 |
| Content of a residual butadiene monomer (%) | 2.0 | 0.7 | 0.001 |

**Table 3 Proportions in Examples 11-22 and Comparative Examples 4-6 (parts by weight)**

| | Polybutadiene latex | Polybutadiene latex | Styrene | Acrylonitrile | Standard deviation of a grafting ratio (%) |
|---|---|---|---|---|---|
| Example 11 (ABS high-rubber powder 1) | Example 1 | 580 | 300 | 120 | 0.23 |
| Example 12 (ABS high-rubber powder 2) | Example 6 | 580 | 300 | 120 | 0.74 |
| Example 13 (ABS high-rubber powder 3) | Example 3 | 580 | 300 | 120 | 0.69 |
| Example 14 (ABS high-rubber powder 4) | Example 7 | 580 | 300 | 120 | 0.67 |
| Example 15 (ABS high-rubber powder 5) | Example 5 | 580 | 300 | 120 | 0.45 |
| Example 16 (ABS high-rubber powder 6) | Example 1 | 500 | 300 | 200 | 0.58 |
| Example 17 (ABS high-rubber powder 7) | Example 1 | 700 | 260 | 40 | 0.67 |
| Example 18 (ABS high-rubber powder 8) | Example 8 | 580 | 300 | 120 | 0.38 |
| Example 19 (ABS high-rubber powder 9) | Example 9 | 580 | 300 | 120 | 0.25 |
| Example 20 (ABS high-rubber powder 10) | Example 10 | 580 | 300 | 120 | 0.40 |
| Example 21 (ABS high-rubber powder 14) | Example 2 | 580 | 300 | 120 | 0.32 |
| Example 22 (ABS high-rubber powder 15) | Example 4 | 580 | 300 | 120 | 0.41 |
| Comparative Example 4 (ABS high-rubber powder 11) | Comparative Example 1 | 580 | 300 | 120 | 1.3 |
| Comparative Example 5 (ABS high-rubber powder 12) | Comparative Example 2 | 580 | 300 | 120 | 1.5 |
| Comparative Example 6 (ABS high-rubber powder 13) | Comparative Example 3 | 580 | 300 | 120 | 1.1 |

**Table 4 Proportions in Examples 23-34 (parts by weight)**

| | Exa mple 23 | Exa mple 24 | Exa mple 25 | Exa mple 26 | Exa mple 27 | Exa mple 28 | Exa mple 29 | Exa mple 30 | Exa mple 31 | Exa mple 32 | Exa mple 33 | Exa mple 34 |
|---|---|---|---|---|---|---|---|---|---|---|---|---|
| ABS high-rubber powder 1 | 28 | | | | | | | 15 | 40 | | | |
| ABS high-rubber powder 2 | | 28 | | | | | | | | | | |
| ABS high-rubber powder 3 | | | 28 | | | | | | | | | |
| ABS high-rubber powder 4 | | | | 28 | | | | | | | | |
| ABS high-rubber powder 5 | | | | | 28 | | | | | | | |
| ABS high-rubber powder 6 | | | | | | 28 | | | | | | |
| ABS high-rubber powder 7 | | | | | | | 28 | | | | | |
| ABS high-rubber powder 8 | | | | | | | | | | 28 | | |
| ABS high-rubber powder 9 | | | | | | | | | | | 28 | |
| ABS high-rubber | | | | | | | | | | | | 28 |
| powder 10 | | | | | | | | | | | | |
| Styrene acrylon itrile copoly mer | 69 | 69 | 69 | 69 | 69 | 69 | 69 | 60 | 78 | 69 | 69 | 69 |
| Surface pits grade | 5A | 3A | 3A | 3A | 4A | 5A | 5A | 5A | 5A | 4A | 5A | 4A |
| Plating adhesio n (kgf/c m) | 1.28 | 0.68 | 0.83 | 0.79 | 0.74 | 0.96 | 0.89 | 1.03 | 1.09 | 0.99 | 1.11 | 0.62 |

**Table 5 Proportions in Examples 35-36 (parts by weight)**

| | Example 35 | Example 36 |
|---|---|---|
| ABS high-rubber powder 14 | 28 | |
| ABS high-rubber powder 15 | | 28 |
| Styrene-acrylonitrile copolymer | 69 | 69 |
| Surface pits grade | 5A | 4A |
| Plating adhesion (kgf/cm) | 1.06 | 0.92 |

**Table 6 Proportions in Comparative Examples 7-9 (parts by weight)**

| | Comparative Example 7 | Comparative Example 8 | Comparative Example 9 |
|---|---|---|---|
| ABS high-rubber powder 11 | 28 | | |
| ABS high-rubber powder 12 | | 28 | |
| ABS high-rubber powder 13 | | | 28 |
| Styrene-acrylonitrile copolymer | 69 | 69 | 69 |
| Surface pits grade | 0A | 0A | 0A |
| Plating adhesion (kgf/cm) | 0.29 | 0.23 | 0.35 |

It can be seen from Tables 4-6 that when the average particle size and half-peak width of the number-average particle size distribution curve of the polybutadiene latex adopted fall within the scope of the present invention, the ABS resin has a good electroplated surface appearance and plating adhesion, thereby increasing the yield of qualified electroplated products.

## Claims

1. A polybutadiene latex, wherein an average particle size of the polybutadiene latex is 290-315 nm, a half-peak width of a number-average particle size distribution curve is 20-150 nm, and a content of a residual butadiene monomer in the polybutadiene latex accounts for 0.005%-1.6% of a dry basis of the entire polybutadiene latex.

2. The polybutadiene latex according to claim 1, wherein the average particle size of the polybutadiene latex is 300-310 nm, the half-peak width of the number-average particle size distribution curve is 30-100 nm, and the content of the residual butadiene monomer in the polybutadiene latex accounts for 0.01%-0.8% of the dry basis of the entire polybutadiene latex.

3. The polybutadiene latex according to claim 1, wherein a gel weight fraction of the polybutadiene latex is 50-95%.

4. A method for preparing the polybutadiene latex according to any one of claims 1-3, comprising:
mixing raw materials for a polymerization reaction to obtain the polybutadiene latex, wherein the raw materials comprise, in parts by weight: 95-115 parts of butadiene, 0.02-6 parts of an initiator, 0.02-10 parts of an electrolyte, 0.1-12 parts of an emulsifier, 0.01-6 parts of a chain transfer agent, 0.02-8 parts of a rubber particle size control agent, 0-6 parts of a gel content regulator, and 40-400 parts of water; and the rubber particle size control agent is polyoxyethylene carboxylate.

5. The preparation method according to claim 4, wherein the initiator comprises one or more of sodium persulfate, potassium persulfate, ammonium persulfate, and azobisisobutyronitrile; the electrolyte comprises one or more of sodium carbonate, sodium bicarbonate, sodium hydroxide, potassium carbonate, and potassium hydroxide; and the emulsifier comprises one or more of a sodium salt of a naphthalenesulfonic acid formaldehyde condensate, a potassium salt of a naphthalenesulfonic acid formaldehyde condensate, potassium oleate, potassium stearate, disproportionated potassium rosinate, sodium dodecylbenzenesulfonate, and sodium dodecylsulfonate.

6. The preparation method according to claim 4, wherein the chain transfer agent comprises one or more of tertiary dodecyl mercaptan, n-dodecyl mercaptan, tetradecyl mercaptan, tridecyl mercaptan, undecyl mercaptan, and decyl mercaptan; the rubber particle size control agent has a structural formula of RCOO(CH₂CH₂O)ₘH, wherein R is long-chain alkyl, the long-chain alkyl has a carbon atom number of 4-19, and m is 4-11; and gel content regulator is dialkyldithioxanthate, wherein the alkyl has a carbon atom number of 1-13.

7. The preparation method according to claim 4, wherein the raw materials comprise, in parts by weight: 98-110 parts of the butadiene, 0.12-5 parts of the initiator, 0.05-6 parts of the electrolyte, 1-8 parts of the emulsifier, 0.1-4 parts of the chain transfer agent, 0.05-5 parts of the rubber particle size control agent, 0.2-5 parts of the gel content regulator, and 50-300 parts of the water.

8. The preparation method according to claim 4, wherein the polymerization reaction comprises: heating to 55-85°C for reacting for 23-38 hours.

9. An ABS high-rubber powder, being a copolymer of the polybutadiene latex according to any one of claims 1-3, styrene, and acrylonitrile.

10. The ABS high-rubber powder according to claim 9, wherein the polybutadiene latex has a weight fraction of 50-70%, and the acrylonitrile has a weight fraction of 4-20%.

11. An ABS resin, comprising, in parts by weight, the following components: 15-40 parts of the ABS high-rubber powder according to claim 9 and 60-78 parts of a styrene-acrylonitrile copolymer.

12. A method for preparing the ABS resin according to claim 11, comprising:
mixing components, and extruding the same through a twin-screw extruder, followed by cooling and pelletizing to obtain the ABS resin.

13. A use of the ABS resin according to claim 11 in electroplated parts of interior and exterior trims of automobiles.
